(19) Europäisches Patentamt / European Patent Office / Office européen des brevets

(11) **EP 2 572 145 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **11760689.7**

(22) Anmeldetag: **02.05.2011**

(51) Int Cl.:
*F24J 3/08* *(0000.00)*    *E03F 1/00* *(2006.01)*

(86) Internationale Anmeldenummer:
**PCT/EP2011/002172**

(87) Internationale Veröffentlichungsnummer:
**WO 2011/157320 (22.12.2011 Gazette 2011/51)**

(54) **ERDKOLLEKTOR, SYSTEM UND VERFAHREN ZUR ERRICHTUNG EINES ERDKOLLEKTORS**

GROUND COLLECTOR, SYSTEM, AND METHOD FOR CONSTRUCTING A GROUND COLLECTOR

COLLECTEUR GÉOTHERMIQUE, SYSTÈME ET PROCÉDÉ POUR INSTALLER UN COLLECTEUR GÉOTHERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2010 DE 102010020827**

(43) Veröffentlichungstag der Anmeldung:
**27.03.2013 Patentblatt 2013/13**

(73) Patentinhaber: **WQ-Tec AG**
**4142 Münchenstein (CH)**

(72) Erfinder:
• **KARSCH, Hans-Ulrich**
**96271 Grub am Forst (DE)**
• **STEINHÄUSER, Harry**
**96191 Viereth-Trunstadt (DE)**

(74) Vertreter: **Hauck Patentanwaltspartnerschaft mbB**
**Postfach 11 31 53**
**20431 Hamburg (DE)**

(56) Entgegenhaltungen:
**EP-A1- 1 764 446       DE-A1- 3 022 624**
**DE-A1- 3 148 600       DE-A1-102006 001 169**
**DE-A1-102006 061 065   DE-A1-102008 021 321**
**DE-A1-102008 028 488**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Erdkollektor, ein System und ein Verfahren zur Errichtung eines Erdkollektors gemäß dem Oberbegriff des Anspruchs 1 bzw. 10.

Aus der DE 102 00 106 B4 ist eine Anordnung und Verlegung von Rohrleitungen für einen Erdkollektor in Kombination mit einem Versickerungssystem bekannt. Ein Versickerungssystem für einen Erdkollektor ist ebenfalls aus der US 4,106,555 bekannt. Dabei wird im Bereich einer Metallplatte als Kollektor ein gut wärmeleitendes Fett, beispielsweise ein Silikonfett ins Erdreich eingebracht.

DE 10 2006 061 065 A1 offenbart ein Erdkollektormodul einer Wärmepumpe und ein Verfahren zur Errichtung eines Erdkollektors gemäß dem Oberbegriff des Anspruchs 1 bzw. 10. Dabei wird zur Ausbildung eines Vertikalkollektors ein Schlitz ins Erdreich gefräst.

Aus der DE 31 48 600 A1 ist eine Anordnung von Erdwärmekollektoren für Wärmepumpen in Kiesschichten in Gräben bekannt.

Aus der DE 10 2006 001 169 A1 ist ein Verfahren zur Verbesserung der Wärmegewinnung aus der Erdwärme mit Erdwärmetauschern durch die gezielte Versickerung von Wasser bekannt.

Der Erfindung liegt die Aufgabe zu Grunde einen Erdkollektor für eine Wärmepumpe möglichst zu verbessern.

Diese Aufgabe wird durch einen Erdkollektor mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist Erdkollektor für eine Wärmepumpe vorgesehen. Der Erdkollektor weist einen ins Erdreich gefrästen Schlitz auf. Vorzugsweise ist der Schlitz bezüglich der Erdoberfläche vertikal ausgebildet. Bevorzugt sind Flächen von zwei Wänden des Schlitzes zueinander im Wesentlichen parallel ausgebildet.

Der Erdkollektor weist eine im Schlitz angeordnete, flächig ausgebildete Erdkollektorvorrichtung auf, die zum Anschluss an eine Wärmepumpe geeignet ist. Damit ist die Erdkollektorvorrichtung entsprechend zum Anschluss an eine adiabatische (Kälte-)Maschine geeignet. In der Erdkollektorvorrichtung ist ein Medium zum Transport von Wärmeenergie von der Erdkollektorvorrichtung zur Wärmepumpe vorgesehen. Hierzu ist die Erdkollektorvorrichtung über Verbindungsrohre, Verteiler, Anschlussstellen usw. an die Wärmepumpe angeschlossen. Vorteilhafterweise ist die Erdkollektorvorrichtung als Modul mit einem Kunststoffrohr für das Medium und mit einem Träger ausgebildet, wobei das Kunststoffrohr auf dem Träger befestigt ist. Alternativ können auch andere Ausbildungen einer Erdkollektorvorrichtung verwendet werden, wie flächige Volumenkörper aus Kunststoff oder dergleichen.

Der Erdkollektor weist ein erstes Füllmaterial auf, das den Schlitz im Bereich der Erdkollektorvorrichtung verfüllt. Das erste Füllmaterial ist dabei vom Erdreich verschieden, das an den Schlitz angrenzt. Vorzugsweise ist das erste Füllmaterial - beispielsweise durch ein Einschwemmen mit Wasser - im Schlitz verdichtet, um einen höheren Wärmeleitwert zu erzielen.

Der Durchlässigkeitsbeiwert des ersten Füllmaterials ist für Wasser höher als der Durchlässigkeitsbeiwert des Erdreichs, das im Bereich der Erdkollektorvorrichtung an den Schlitz angrenzt. Das erste Füllmaterial weist eine Korngrößenverteilung auf, wobei ein Anteil an Korngröße von 0,125 mm bis 1 mm überwiegt. Hingegen sind die Anteile mit Korngrößen kleiner 0,125 mm und größer 1 mm vorzugsweise deutlich geringer. Sand, insbesondere gereinigter Flusssand weist die Korngrößenverteilung mit dem überwiegenden Anteil an Korngröße von 0,125 mm bis 1 mm auf.

Durch ein erstes Füllmaterial mit einem höheren Durchlässigkeitsbeiwert als das Erdreich wird der Vorteil erzielt, dass das erste Füllmaterial eine bevorzugte Fließrichtung entlang der Erdkollektorvorrichtung bewirkt, indem die Fließrate im Schlitz durch das erste Füllmaterial gegenüber dem Erdreich erhöht ist. Durch die Korngrößenverteilung mit dem überwiegenden Anteil an Korngröße von 0,125 mm bis 1 mm wird zudem der Vorteil erzielt, dass im Schlitz die Fließrate gegenüber dem Erdreich nur leicht erhöht ist, so dass das erste Füllmaterial im Schlitz Feuchtigkeit über die gesamte Schlitzhöhe halten kann. Zudem bewirkt die Korngrößenverteilung mit dem überwiegenden Anteil an Korngröße von 0,125 mm bis 1 mm auch im Zustand sehr geringer Feuchtigkeit eine ausreichende Wärmekopplung zum Erdreich zu beiden Seiten des Schlitzes.

Der Erfindung liegt weiterhin die Aufgabe zu Grunde ein möglichst verbessertes Verfahren zur Errichtung eines Erdkollektors anzugeben. Diese Aufgabe wird durch das Verfahren mit den Merkmalen des unabhängigen Anspruchs 10 gelöst. Vorteilhafte Weiterbildungen sind Gegenstand von abhängigen Ansprüchen und in der Beschreibung enthalten.

Demzufolge ist ein Verfahren zur Errichtung eines Erdkollektors vorgesehen. Zunächst wird ein Schlitz ins Erdreich gefräst. Vorzugsweise wird der Schlitz mit einer Breite kleiner zwanzig Zentimeter ins Erdreich gefräst. Vorzugsweise erfolgt das Fräsen mittels einer Kettenfräse. Die Fräse weist vorzugsweise Glieder mit Meißeln und/oder Messern auf. Bevorzugt wird der Schlitz mit einer Tiefe größer zwei Meter ausgefräst. Der beim Fräsvorgang herausgefräste Aushub wird beispielsweise abtransportiert.

Nach dem Fräsen des Erdschlitzes wird im Schlitz eine Erdkollektorvorrichtung positioniert, wobei die Erdkollektorvorrichtung für eine Wärmepumpe geeignet ist. Vorzugsweise wird die Erdkollektorvorrichtung angrenzend an einer Wand des Schlitzes positioniert um eine gute Wärmekopplung zum angrenzenden Erdreich zu erzielen. Vorzugsweise wird die Erdkollektorvorrichtung in der Position durch ein Hilfsmittel gehalten.

Nach der Positionierung der Erdkollektorvorrichtung wird der Schlitz im Bereich der Erdkollektorvorrichtung mit einem ersten Füllmaterial verfüllt. Die Füllhöhe des ersten Füllmaterials ist dabei vorzugsweise gleich oder höher als die Höhe der Erdkollektorvorrichtung.

Vorzugsweise weist das erste Füllmaterial einen höheren Durchlässigkeitsbeiwert als der Durchlässigkeitsbeiwert des im Bereich der Erdkollektorvorrichtung an den Schlitz angrenzenden Erdreichs auf. Vorzugsweise weist das erste Füllmaterial eine Korngrößenverteilung auf, wobei ein Anteil an Korngröße von 0,125 mm bis 1 mm überwiegt. Hingegen sind die Anteile mit Korngrößen kleiner 0,125 mm und größer 1 mm vorzugsweise deutlich geringer. Sand, insbesondere gereinigter Flusssand weist die Korngrößenverteilung mit dem überwiegenden Anteil an Korngröße von 0,125 mm bis 1 mm auf.

Nach der Füllung des Schlitzes mit dem ersten Füllmaterial wird oberhalb des ersten Füllmaterials im Schlitz ein Rohr mit Öffnungen zur Abgabe von Wasser angeordnet. Vorzugsweise wird das Rohr innerhalb eines zweiten Füllmaterials positioniert, wobei das zweite Füllmaterial im Schlitz oberhalb des ersten Füllmaterials eingebracht ist.

Der Erfindung liegt weiterhin die Aufgabe zu Grunde, ein System mit einem Erdkollektor anzugeben.

Diese Aufgabe wird durch ein System mit den Merkmalen des unabhängigen Anspruchs 8 gelöst. Vorteilhafte Weiterbildungen sind Gegenstand von abhängigen Ansprüchen und in der Beschreibung angegeben.

Demzufolge ist ein System mit einem Erdkollektor vorgesehen. Der Erdkollektor ist dabei vorzugsweise wie vorhergehend und nachfolgend erläutert ausgebildet.

Das System weist einen ins Erdreich gefrästen Schlitz auf. Weiterhin weist das System eine Erdkollektorvorrichtung auf, die im Schlitz angeordnet ist, wobei die Erdkollektorvorrichtung zum Anschluss an eine Wärmepumpe geeignet ist. Bevorzugt weist das System eine Mehrzahl von Erdkollektorvorrichtungen auf, wobei die Anzahl der Erdkollektorvorrichtungen für die benötigte Leistung der Wärmepumpe dimensioniert ist.

Der Schlitz ist im Bereich der Erdkollektorvorrichtung mit einem ersten Füllmaterial verfüllt. Das System weist ein Rohr mit Öffnungen zur Abgabe von Wasser in das erste Füllmaterial auf. Das Rohr ist oberhalb des ersten Füllmaterials im Schlitz angeordnet. Das System weist weiterhin eine Vorrichtung zur Einspeisung von Oberflächenwasser in das Rohr auf. Das Oberflächenwasser ist beispielsweise gesammeltes Regenwasser.

Das erste Füllmaterial weist einen höheren Durchlässigkeitsbeiwert als der Durchlässigkeitsbeiwert des im Bereich der Erdkollektorvorrichtung an den Schlitz angrenzenden Erdreichs auf. Das erste Füllmaterial weist Sand, insbesondere gereinigten Flusssand, auf.

Ein weiterer Aspekt der Erfindung ist eine Vorrichtung für eine Infiltration von Wasser. Dabei soll insbesondere Regenwasser dem Erdreich zugeführt werden, der an seiner Oberfläche versiegelt sein kann.

Die Vorrichtung weist einen ins Erdreich gefrästen Schlitz auf. Der Schlitz weist ein Aspektverhältnis von Höhe zu Bereite größer 10 auf. Vorzugsweise ist der Schlitz bezogen auf die Erdoberfläche vertikal ausgebildet. Vorzugsweise weist der Schlitz Wände auf, deren Flächen nach Art einer Parallelen ausgebildet sind. Bevorzugt weist der Schlitzt eine Breite kleiner 20cm und eine Tiefe größer 2 Meter auf.

Die Vorrichtung weist ein erstes Füllmaterial auf, das den überwiegenden Teil des Schlitzes verfüllt. Das erste Füllmaterial ist beispielsweise Sand, insbesondere grobkörniger Sand.

Die Vorrichtung weist ein Rohr mit Öffnungen zur Abgabe des Wassers auf. Das Rohr ist oberhalb des ersten Füllmaterials im Schlitz angeordnet.

Das erste Füllmaterial weist einen höheren Durchlässigkeitsbeiwert als der Durchlässigkeitsbeiwert des an den Schlitz angrenzenden Erdreichs auf.

In einer möglichen Ausgestaltung sind der Schlitz und das an den Schlitz angrenzende Erdreich an der Erdoberfläche versiegelt.

Die im Folgenden beschriebenen Weiterbildungen beziehen sich sowohl auf den Erdkollektor, als auch auf das System mit dem Erdkollektor als auch auf das Verfahren zur Errichtung eines Erdkollektors.

Gemäß einer bevorzugten Weiterbildung bewirkt eine Geometrie des Schlitzes - insbesondere das Höhen-Breite-Verhältnis des Schlitzes - einen überwiegenden Anteil der Fließrate von Wasser in einer Richtung entlang einer Fläche der Erdkollektorvorrichtung. Beispielsweise ist die Fläche der Erdkollektorvorrichtung durch ein in der Fläche verlegtes Rohr der Erdkollektorvorrichtung gebildet. Vorzugsweise ist der Schlitz schmal ausgebildet. Vorzugsweise ist die Richtung der Fließrate überwiegend in Lotrichtung. Vorzugsweise ist der Schlitz im Erdreich vertikal ausgebildet. Bevorzugt weist der Schlitz Wände auf, deren Flächen nach Art einer Parallelen aufgebildet sind.

In einer anderen Weiterbildung ist vorgesehen, dass oberhalb des ersten Füllmaterials im Schlitz ein zweites Füllmaterial angeordnet ist. Das zweite Füllmaterial weist einen höheren Durchlässigkeitsbeiwert als der Durchlässigkeitsbeiwert des ersten Füllmaterials auf. Vorzugsweise weist das zweite Füllmaterial eine größere Porosität als das erste Füllmaterial auf. Vorzugsweise weist das zweite Füllmaterial Kies auf. Vorzugsweise wird als zweites Füllmaterial ein 8/16 Kies verwendet. Der 8/16 Kies weist den überwiegenden Anteil - beispielsweise größer 80 % - der Korngrößen zwischen 8 mm und 16 mm auf.

Gemäß einer bevorzugten Weiterbildung ist vorgesehen, dass oberhalb des ersten Füllmaterials im Schlitz ein Rohr mit Öffnungen zur Abgabe von Wasser angeordnet ist. Vorteilhafterweise ist das Rohr aus Kunststoff ausgebildet.

Vorzugsweise sind die Öffnungen als Schlitze oder Bohrungen mit einem Durchmesser von 0,6 mm bis 2,0 mm vorzugsweise zwischen 0,8 mm und 1,6 mm ausgebildet.

In einer vorteilhaften Ausgestaltungsvariante ist vorgesehen, dass das Rohr einen Durchmesser von mindestens einem Drittel - vorzugsweise von mindestens der Hälfte - der Breite des Schlitzes aufweist. Vorteilhafterweise weist das Rohr einen Durchmesser von 100 mm DN100 oder einen Durchmesser von 125 mm DN125 auf. Vorteilhafterweise wird als Rohr ein Drainagerohr oder ein druckfestes Rohr, beispielsweise ein KG-Rohr verwendet. Vorteilhafterweise ist das Rohr mit einer Kokosfaser (Coir, Kokofil) in Form einer Matte ummantelt. Die Kokosfaser weist vorteilhafterweise selbstreinigende Eigenschaften auf. Die Kokosfaser reduziert signifikant das Eindringen von feinen Partikeln in die Öffnungen des Rohres. Die feinen Partikel könnten die Öffnungen des Rohres verstopfen.

In vorteilhaften Ausgestaltungsvarianten ist im Schlitz zumindest oberhalb des Rohres ein Filtervlies angeordnet. In einer ersten Ausgestaltungsvariante ist das Filtervlies in einer Ebene flächig über das Erdreich und den Schlitz angeordnet. In einer zweiten Ausgestaltungsvariante ist das Filtervlies flächig über der zweiten Füllschicht angeordnet. In einer dritten Ausgestaltungsvariante ist das Filtervlies zumindest teilweise um das Rohr zur Abgabe von Wasser angeordnet, bevorzugt um das Rohr gewickelt.

Gemäß einer vorteilhaften Weiterbildung ist vorgesehen, dass das Rohr unterhalb von siebzig Zentimetern unter der Erdoberfläche, vorzugsweise unterhalb der örtlichen Frosttiefe angeordnet ist.

Gemäß einer vorteilhaften Weiterbildungsvariante ist das Rohr im Schlitz vom zweiten Füllmaterial umgeben angeordnet. Vorzugsweise ist dabei die Korngröße des zweiten Füllmaterials größer als Durchmesser der Öffnungen des Rohres. Ist die Korngröße - zum Beispiel von Kies - signifikant größer als der Durchmesser der Öffnungen des Rohres können Verstopfungen der Öffnungen minimiert werden.

Um eine gute Wärmeleitfähigkeit zwischen dem Erdreich und der Erdkollektorvorrichtung zu erzielen und somit den Wärmewiderstand zwischen dem Erdreich und der Erdkollektorvorrichtung zu minimieren, ist in einer besonders vorteilhaften Ausgestaltungsvariante vorgesehen, dass die Erdkollektorvorrichtung an einer Wand des Schlitzes angeordnet ist. Zusätzlich zu einer guten Wärmeleitfähigkeit zum angrenzenden Erdreich wird der weitere Vorteil erzielt, dass sich der schmale Schlitz mit dem ersten Füllmaterial leicht verfüllen lässt. Das erste Füllmaterial gelang so insbesondere in die durch die an der Wand angeordnete Erdkollektorvorrichtung bedingten Zwischenräume.

Gemäß einer Weiterbildung sind der Schlitz und das an den Schlitz angrenzende Erdreich an der Erdoberfläche versiegelt. Beispielsweise ist die Erdoberfläche durch eine Teerschicht oder eine Pflasterung eines Parkplatzes versiegelt. Dennoch ermöglichen der Schlitz und das im Schlitz angeordnet Rohr eine Infiltrierung von Wasser über die große Grenzfläche insbesondere zwischen dem ersten Füllmaterial und dem den Schlitz umgebenden Erdreich.

In einer vorteilhaften Ausgestaltungsvariante ist vorgesehen, dass das erste Füllmaterial Sand, insbesondere gewaschenen Sand aufweist. Vorzugweise beträgt die maximale Korngröße des Sandes bis zu vier Millimetern. Vorzugsweise weist das erste Füllmaterial eine Korngrößenverteilung auf, wobei der Anteil an Korngröße von 0,125 mm bis 1 mm überwiegt, insbesondere über 80% beträgt.

In einer vorteilhaften Ausgestaltung weist das erste Füllmaterial im Schlitz eine größere Mindestkorngröße als das umgebende Erdreich auf. Bevorzugt weist der überwiegende Anteil, vorzugsweise größer 95%, besonders bevorzugt größer 99%, des ersten Füllmaterials im Schlitz eine Mindestkorngröße von mindestens 0,06 Millimeter auf.

Gemäß einer bevorzugten Ausgestaltung weist der Schlitz eine Tiefe größer als zwei Meter und eine Breite kleiner zwanzig Zentimeter auf. Beispielsweise beträgt die Schlitztiefe 2,3 m und die Schlitzbreite 15 cm. Diese Abmessungen des Schlitzes verursachen einen relativ geringen Aushub und dennoch eine große Grenzfläche zwischen erstem Füllmaterial und Erdreich.

Eine Füllhöhe des ersten Füllmaterials im Schlitz ist in einer bevorzugten Ausgestaltungsvariante größer oder gleich der Höhe der Erdkollektorvorrichtung. Hierdurch kann durch das erste Füllmaterial eine gute Wärmekopplung zum ersten Füllmaterial über die gesamte Fläche der Erdkollektorvorrichtung erzielt werden.

In einer besonders vorteilhaften Weiterbildung ist vorgesehen, dass das erste Füllmaterial im Schlitz eine Wärmekopplung zwischen der Erdkollektorvorrichtung und dem Erdreich beidseitig des ersten Füllmaterials bewirkt. Die Wärmekopplung bewirkt zu beiden Hauptseiten des Schlitzes einen Wärmetransport über die Grenzfläche an der jeweiligen Schlitzwand.

Gemäß einer vorteilhaften Ausgestaltung weist das erste Füllmaterial im Schlitz eine Wärmeleitfähigkeit größer 0,25 W/mK auf. Vorteilhafterweise steigt die Wärmeleitfähigkeit mit der Feuchtigkeit des ersten Füllmaterials.

Die Vorrichtung zur Einspeisung weist gemäß einer vorteilhaften Weiterbildung eine Zuleitung für das Oberflächenwasser auf. Die Zuleitung ist beispielsweise ein Leitungssystem, das mit einem Filter und/oder einer Pumpe verbunden ist. In einer Ausgestaltung ist vorgesehen, dass die Vorrichtung zur Einspeisung einen Regenwassertank und/oder eine Wasserpumpe aufweist. Alternativ ist es auch möglich als Leitungssystem einen Entwässerungsgraben vorzusehen, der über dem Schlitz positioniert ist Vorzugsweise weist das den Entwässerungsgraben bildende Material im Bereich des Schlitzes einen kleineren Durchlässigkeitsbeiwert als außerhalb des Bereichs auf.

Gemäß einer bevorzugten Weiterbildung weist die Vorrichtung einen Feuchtigkeitssensor und eine Steuerungsvorrichtung zur Steuerung der Wasserpumpe anhand einer mittels des Feuchtigkeitssensors bestimmten Feuchtigkeit im Bereich der Erdkollektorvorrichtung auf.

In einer besonders bevorzugten Weiterbildung weist das System eine Steuerung der Wärmepumpe auf. Die Steuerung ist zur Regelung einer Temperatur eines durch die Erdkollektorvorrichtung strömenden Mediums eingerichtet. Die Steuerung ist eingerichtet durch die Regelung der Temperatur des Mediums eine Vereisung von Wasser im ersten Füllmaterial zu verhindern und so den Durchlässigkeitsbeiwert des ersten Füllmaterials zu erhalten. Hierzu kann ein Heizelement, insbesondere ein Heizstab der Wärmepumpe genutzt werden, wobei die Steuerung ausgebildet ist den Heizstab zu aktivieren, wenn die Temperatur des ersten Füllmaterials in einen Temperaturbereich nahe einer Vereisung gelangt. Vorteilhafterweise ist die Gesamtfläche der Erdkollektorvorrichtungen derart ausgelegt, dass auch bei einer erhöhten Energieentnahme keine Vereisung des Erdreichs bewirkt wird. Hierdurch wird der Effekt erzielt, dass der Durchlässigkeitsbeiwert auch bei einer Energieentnahme aus dem Erdreich durch keine Vereisung beeinträchtigt wird.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen

Fig. 1        eine schematische Schnittansicht eines ins Erdreich gefrästen Schlitzes,

Fig. 2a       eine seitliche Schnittansicht eines Ausführungsbeispiels mit Oberflächenversiegelung und Regenwassertank,

Fig. 2b       eine seitliche Schnittansicht eines weiteren Ausführungsbeispiels mit Oberflächenversiegelung und Regenwassertank,

Fig. 3        eine seitliche Schnittansicht eines Ausführungsbeispiels mit Erdoberfläche ohne Versiegelung,

Fig. 4        eine seitliche Schnittansicht eines Ausführungsbeispiels mit Regenwasserzuführung vom Dach eines Gebäudes, und

Fig. 5        eine schematische Draufsicht.

Die Permeabilität kann in der Geotechnik zur Quantifizierung der Durchlässigkeit von Böden und Fels für Flüssigkeiten oder Gase benutzt werden. Der Durchlässigkeitsbeiwert, der auch als Hydraulische Leitfähigkeit bezeichnet werden kann, ist ein rechnerischer Wert, der die Durchlässigkeit von Boden oder Fels für Wasser quantifizieren kann.

Als Formelsymbol für den Durchlässigkeitsbeiwert kann k oder $k_f$ oder (international gebräuchlich) K verwendet werden. Der Durchlässigkeitsbeiwert K hängt vom Volumen und der Geometrie der Poren zwischen den Gesteinspartikeln, sowie von der Viskosität der Flüssigkeit, die durch die Poren strömt ab.

Nach dem Gesetz von Darcy (1856) gilt:

$$Q / F = K * i \qquad\qquad (1)$$

Dabei ist die durch eine poröse Fläche F [m$^2$] pro Sekunde hindurchtretende Wassermenge, die auch als Fließrate Q [m$^3$/s] bezeichnet werden kann, proportional zum hydraulischen Gefälle i [m/m]. Der Durchlässigkeitsbeiwert K [m/s] stellt dabei den Proportionalitätsfaktor dar, welcher von mehreren Eigenschaften, wie Volumen und Geometrie der Poren zwischen den Gesteinspartikeln des Bodens, sowie von der Viskosität der Flüssigkeit, die durch die Poren strömt, abhängt. Das Gefälle i entspricht dem Verhältnis von Druckhöhenunterschied h je Fließlänge l, d.h.

$$i = h / l \qquad\qquad (2)$$

Die Fließrate Q in m$^3$/s kann daher definiert werden zu:

$$Q = K \frac{F \cdot \Delta p}{I \cdot \rho \cdot g} \qquad (3)$$

mit K als Durchlässigkeitsbeiwert, F als poröse Fläche, $\Delta p$ als Druckdifferenz in $N/m^2$, $\rho$ als Dichte des Wassers mit 1000 $kg/m^3$ und g als Erdschwerebeschleunigung mit 9,81 $m/s^2$. Reiner Kies weist einen Durchlässigkeitsbeiwert von $10^{-1}$ bis $10^{-2}$ m/s auf. Hingegen weist Ton einen Durchlässigkeitsbeiwert von $< 10^{-9}$ m/s auf. Die Grenze zwischen einem für Wasser durchlässigen und einem undurchlässigen Boden liegt bei etwa $10^{-6}$ m/s. Die Durchlässigkeit von Böden hängt in erster Linie von deren Porosität ab. Die Porosität von Böden hängt wiederum von der Korngröße und Korngrößenverteilung und damit vom Porenvolumen des Bodens ab. Der Durchlässigkeitsbeiwert K quantifiziert die Fließrate Q von Wasser durch einen durchlässigen Boden in Abhängigkeit von der Druckdifferenz $\Delta p$.

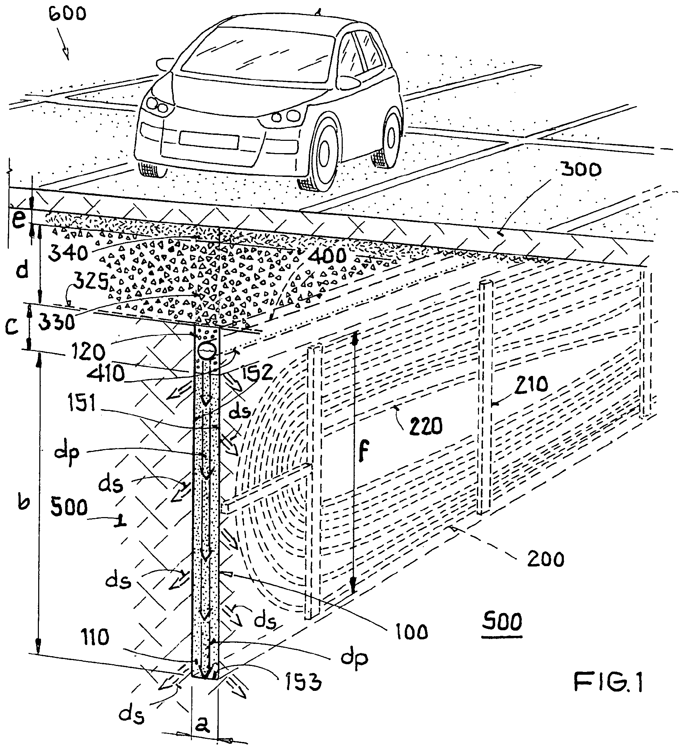

Diese Beziehungen werden im in Fig. 1 dargestellten Ausführungsbeispiel genutzt. In Fig. 1 ist ein ins Erdreich 500 gefräster Schlitz 100 als Schnittansicht schematisch dargestellt. Der Schlitz 100 weist ein hohes Aspektverhältnis von Höhe zu Breite a, vorzugsweise größer 10 auf. Das Aspektverhältnis ist das Verhältnis aus der Tiefe bzw. Höhe des Schlitzes zu seiner kleinsten lateralen Ausdehnung. Vorzugsweise ist die Breite des Schlitzes 100 kleiner 20 cm. Der Schlitz des Ausführungsbeispiels der Fig. 1 weist eine Breite von 15 cm auf. Der Schlitz 100 weist vorzugsweise eine Höhe/Tiefe größer 200 cm auf. Im Ausführungsbeispiel der Fig. 1 weist der Schlitz 100 eine Tiefe von 230 cm auf. Ein derartiger Schlitz 100 mit einem hohen Aspektverhältnis wird vorzugsweise durch Fräsen mittels einer Kettenfräse erzeugt. Natürlich ist es auch möglich andere geometrische Abmessungen des Schlitzes 100 mit noch höherem Aspektverhältnis zu verwenden. In einem nicht dargestellten Ausführungsbeispiel wird beispielsweise der Schlitz bis zu einer Tiefe von 3,2m gefräst. Die Erdkollektorvorrichtung und die Füllhöhe des ersten Füllmaterials weisen in diesem Ausführungsbeispiel eine Höhe von 2,9m - für eine noch größere Energieentnahme - auf.

Im Schlitz 100 ist eine Erdkollektorvorrichtung 200 angeordnet. Die Erdkollektorvorrichtung 200 ist im Ausführungsbeispiel der Fig. 1 als Modul ausgebildet. Die Erdkollektorvorrichtung 200 weist ein Kunststoffrohr 220 für Medium und einen Träger 210 aus Holz auf. Die Erdkollektorvorrichtung 200 ist zum Anschluss an eine Wärmepumpe geeignet. Hierzu wird die Erdkollektorvorrichtung 200 über Verbindungsrohre und Verteiler an die Wärmepumpe angeschlossen.

Der untere Bereich des Schlitzes 100 ist bis zur ersten Füllhöhe b mit einem ersten Füllmaterial 110 im Bereich der Erdkollektorvorrichtung 200 verfüllt. Die erste Füllhöhe b ist dabei die größte Füllhöhe des Schlitzes 100, so dass der Schlitz überwiegend mit dem ersten Füllmaterial 110 verfüllt ist. Das erste Füllmaterial 110 ist dabei vom Erdreich 500 verschieden. Das durch Fräsen des Schlitzes 100 entnommene Erdreich wird daher nicht zur Verfüllung des Schlitzes 100 verwendet.

Für Wasser ist nach dem Setzen des ersten Füllmaterials 110 im Schlitz 100 der Durchlässigkeitsbeiwert $K_S$ des ersten Füllmaterials 110 höher als der Durchlässigkeitsbeiwert $K_E$ des im Bereich der Erdkollektorvorrichtung 200 an den Schlitz 100 angrenzenden Erdreichs 500, so dass gilt:

$$K_S > K_E \qquad (4)$$

Im Ausführungsbeispiel der Fig. 1 wird als erstes Füllmaterial 110 gereinigter Flusssand mit überwiegendem Anteil mit einer Korngröße zwischen 0,125 mm und 1mm verwendet. Beispielsweise weist das erste Füllmaterial Sand auf, wobei gemäß der Korngrößenverteilung 0,5% eine Korngröße größer 4 mm, 2,6 % eine Korngröße zwischen 2,8 mm und 4 mm, 4,4 % eine Korngröße zwischen 2 mm und 2,8 mm, 21,2 % eine Korngröße zwischen 1 mm und 2 mm, 39,6 % eine Korngröße zwischen 0,5 mm und 1 mm, 26,6 % eine Korngröße zwischen 0,25 mm und 0,5 mm, 3,6 % eine Korngröße zwischen 0,125 mm und 0,25 mm, 1,1% eine Korngröße zwischen 0,063 mm und 0,125 mm und 0,4% eine Korngröße kleiner 0,063 mm aufweist. Der gereinigte Flusssand weist einen höheren Durchlässigkeitsbeiwert $K_S$ aufgrund der anderen Korngrößenverteilung gegenüber dem den Schlitz 100 umgebenden Erdreich 500 auf, das eine andere Korngrößenverteilung mit einem größeren Anteil kleinerer Korngrößen aufweist.

Wird entgegen dem Ausführungsbeispiel der Fig. 1 der Schlitz 100 mit dem herausgefrästen Erdreich wieder verfüllt, weist dieses eingefüllte Erdreich nach einem Setzen des Erdreichs im Schlitz 100 wieder den gleichen Durchlässigkeitsbeiwert $K_E$ wie das umgebende Erdreich 500 auf.

Zwar führt der Fräsvorgang temporär zu einer Auflockerung des Erdreichs, doch durch den natürlichen Vorgang des Setzens - der beispielsweise 1 Jahr andauert - wird wieder der ursprüngliche Durchlässigkeitsbeiwert $K_E$ des Erdreichs 500 erreicht.

Um eine gute Wärmekopplung mit einer guten Wärmeleitfähigkeit zum Erdreich 500 zu beiden Seiten der Erdkollektorvorrichtung 200 zu erzielen wird das erste Füllmaterial in den Schlitz 100 möglichst dicht eingebracht, insbesondere mit Wasser eingeschwemmt, um die Anzahl von Lufteinschlüssen zu minimieren. Zusätzlich kann das erste Füllmaterial im Schlitz 100 verdichtet werden.

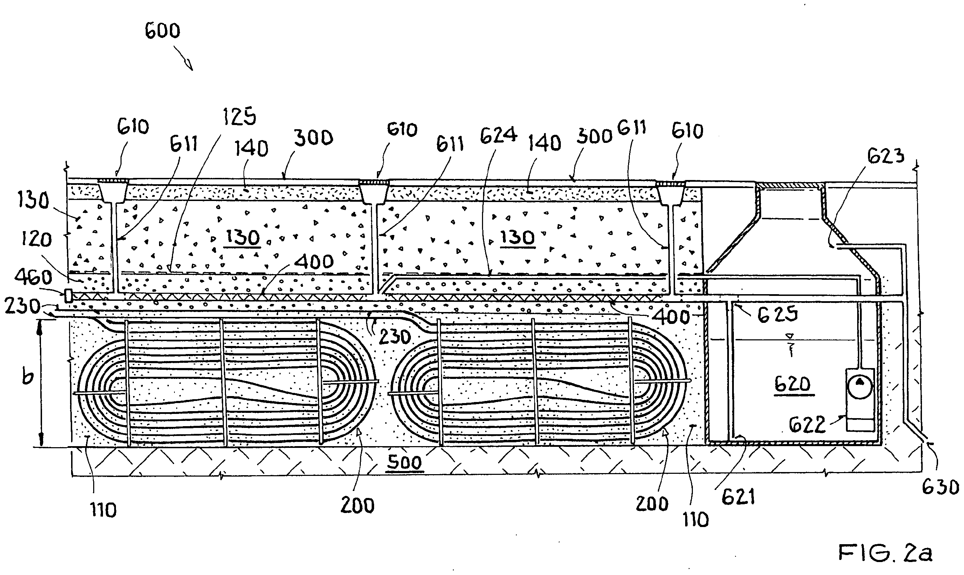

Oberhalb des ersten Füllmaterials 110 ist im Schlitz 100 ein Rohr 400 mit Öffnungen 410 zur Abgabe von Wasser angeordnet. Das Rohr 400 ist beispielsweise ein Drainagerohr. Ebenso kann als Rohr 400 ein Standard-Rohr mit Löchern oder Schlitzen versehen werden. Wasser wird in das Rohr eingeleitet, wie zu den Figuren 2a bis 5 erläutert wird.

Das Wasser tritt aus den Öffnungen 410 des Rohres 400 aus. Aufgrund der Gravitationskraft versickert das Wasser in das erste Füllmaterial 110. Da das erste Füllmaterial 110 einen deutlich höheren Durchlässigkeitsbeiwert $K_F$ als das umgebende Erdreich 500 aufweist, bewirkt die Form des Schlitzes 100, das der überwiegende Teil der Fließrate Q in einer primären Richtung dp gerichtet ist. Demzufolge ist zunächst die Fließrate Q in Richtung dp zum Boden 153 des Schlitzes 100 vorherrschend. Die Feuchtigkeit im ersten Füllmaterial 110 wird erhöht und zusätzlich Wärmeenergie durch das Wasser zugeführt. Die Fließrate Q in der primären Richtung dp ist dabei entlang einer Hauptfläche der Erdkollektorvorrichtung 200 gerichtet, so dass mittels der Erdkollektorvorrichtung 200 dem durch das erste Füllmaterial 110 hindurchtretenden Wasser Wärmeenergie entzogen werden kann. Hierzu ist im Ausführungsbeispiel der Fig. 1 vorgesehen, dass die Flächen der Wände 151, 152 des Schlitzes zueinander nach Art einer Parallelen ausgebildet sind. Vorteilhafterweise sind die Wände 151, 152 nach Art einer Lotsenkrechten in das Erdreich 500 eingebracht.

Wird eine Sättigung des ersten Füllmaterials 110 mit Wasser erreicht, kann dem ersten Füllmaterial 110 nur soviel Wasser zugeführt werden, wie über die Grenzfläche vom ersten Füllmaterial 110 ins angrenzende Erdreich 500 versickert. Die Fließrate Q in Richtung ds des Erdreichs 500 hängt dabei von der Druckdifferenz $\Delta p$ des Wassers zwischen dem ersten Füllmaterial 110 und dem Erdreich 500 ab. Aufgrund des geringeren Durchlässigkeitsbeiwerts $K_E$ des umgebenden Erdreichs 500 ist die Fließrate Q in lateraler Richtung zum Erdreich 500 hin jedoch geringer, so dass das Wasser im Schlitz 100 längere Zeit gespeichert bleibt. Mit der Speicherung des Wassers im Schlitz 100 im Bereich der Erdkollektorvorrichtung 200 kann die Wärmeleitfähigkeit signifikant erhöht werden. Die erhöhte Wärmeleitfähigkeit ist insbesondere im Falle trockener Böden oberhalb 500 Höhenmeter oder versiegelter Böden vorteilhaft.

Aufgrund der großen Grenzfläche zwischen dem ersten Füllmaterial 110 und dem angrenzenden Erdreich 500 durch die Flächen der Wände 151, 152 des Schlitzes 100 kann zudem eine große Wassermenge in das Erdreich durch Infiltration eingebracht werden. Die Grenzfläche zwischen dem ersten Füllmaterial 110 und dem angrenzenden Erdreich 500 ist dabei größer als zweimal die Tiefe mal die Länge des Schlitzes 100.

Es werden also durch das Ausführungsbeispiel der Fig. 1 in Synergie die technischen Effekte erzielt, dass trotz relativ geringem Aushub für den Schlitz 100 eine große Grenzfläche zwischen Schlitz 100 und Erdreich 500 für eine gute Infiltration von Wasser erzielt wird und zugleich wird aufgrund der unterschiedlichen Durchlässigkeitsbeiwerts $K_E$ und $K_F$ des umgebenden Erdreichs 500 und des ersten Füllmaterials 110 Feuchtigkeit im Bereich der Erdkollektorvorrichtung 200 für eine gute Wärmeleitfähigkeit für längere Zeit gespeichert, so dass der Wirkungsgrad des Erdkollektors erhöht wird.

In Abwandlung zum Ausführungsbeispiel der Fig. 1 könnte der Schlitz 100 im Bodenbereich in eine sandige Erdschicht des Erdreichs 500 hineinreichen oder an diese grenzen (in Fig. 1 nicht dargestellt), wobei der sandige Boden einen hohen Durchlässigkeitsbeiwert aufweist, der eine zu schnelle Fließrate in die sandige Erdschicht verursacht. In diesem Fall wird der Boden des Schlitzes (in Fig. 1 nicht dargestellt) mit einem Dichtmaterial mit sehr geringem Durchlässigkeitsbeiwert - wie beispielsweise Lehm, Ton oder einer Dichtfolie - abgedichtet, um die Feuchtigkeit im ersten Füllmaterial 110 zu halten.

In Fig. 1 ist das Rohr 400 zur Abgabe von Wasser innerhalb eines zweiten Füllmaterials 120 oberhalb des ersten Füllmaterials 110 im Schlitz 100 angeordnet. Das Rohr 400 ist vom zweiten Füllmaterial 120 vollständig umgeben. Das zweite Füllmaterial 120 weist einen größeren Durchlässigkeitsbeiwert als das erste Füllmaterial auf. Das zweite Füllmaterial 120 weist beispielsweise Kies oder ein anderes poriges Material aus Kunststoff auf. Beispielsweise wird als zweites Füllmaterial 120 Kies mit einer Korngröße zwischen 6,3 mm und 20 mm - insbesondere 8/16 Kies - verwendet. Das erste Füllmaterial 110 reicht im Ausführungsbeispiel der Fig. 1 bis zur Füllhöhe b von 200 cm ausgehend vom Boden 153 des Schlitzes 100. Das zweite Füllmaterial 120 verfüllt den Schlitz mit einer zweiten Füllhöhe c von 30 cm bis zur Oberfläche des Erdreichs 500. Oberhalb des Erdreichs ist eine Schicht 330 aus Schotter mit einer Dicke d von 60 cm und oberhalb des Schotters eine Schicht 340 mit einer Dicke e von 10 cm aus Splitt angeordnet. Das Erdreich 500 ist durch eine den Splitt 340 deckende Teerschicht 300 oder Pflasterung 300 des Parkplatzes versiegelt. Zwischen der zweiten Füllschicht 120 und dem Schotter 330 kann ein Filtervlies 325 oder eine Schutzfolie vorgesehen sein.

Trotz der Versiegelung 300 der Erdoberfläche oberhalb des Schlitzes 100 kann sich das Erdreich 500 thermisch regenerieren, indem dem Erdreich 500 über das Rohr 400 Wasser und damit die Wärmeenergie des Wassers wieder zugeführt wird. Die Wärmeenergie des Wassers wird durch das Rohr 400 und die Geometrie des Schlitzes 100 ortsgenau unmittelbar an der Erdkollektorvorrichtung 200 ins Erdreich 500 eingebracht. Durch das ortsgenaue Einbringen der Feuchtigkeit und den Erhalt der Feuchtigkeit im Bereich der Erdkollektorvorrichtung 200 kann die Wärmeentzugsleistung deutlich - in einigen Fällen um 50% - erhöht werden. Hierdurch wird der Wirkungsgrad des Erdkollektors ebenfalls signifikant erhöht.

Fig. 2a zeigt ein weiteres Ausführungsbeispiel in einer seitlichen Schnittansicht. Dargestellt sind das erste Füllmaterial 110 und zwei Erdkollektorvorrichtungen 200 mit Verbindungsrohren 230 zum Anschluss an eine Wärmepumpe (in Fig. 2a nicht dargestellt). Die Verbindungsrohre 230 sind in der zweiten Füllschicht 120 angeordnet.

Das Rohr 400 zur Abgabe von Wasser in den Schlitz 100 ist über jeweils ein Zuleitungsrohr 611 mit einem Gully 610 verbunden. Gegen Verschmutzung ist wiederum ein Filtervlies 125 oberhalb des zweiten Füllmaterials 120 und unterhalb von Splitt 140 und Schotter 130 angeordnet. Das Ende des Rohrs 400 zur Abgabe von Wasser ist durch eine Verschlusskappe 460 geschlossen. Wird über die Gullys 610 mehr Regenwasser zugeführt, als im ersten Füllmaterial 110 und dem zweiten Füllmaterial 120 zunächst versickern kann, wird überschüssiges Regenwasser über den Filter 625 - insbesondere einem Feinfilter mit Spaltsieb - einem Regenwassertank 620 mittels beruhigtem Einlauf 621 zugeführt. Verschmutzungen werden zum Kanal 630 abgeleitet. Weiterhin ist ein Überlauf 623 des Regenwassertanks mit dem Kanal 630 verbunden. Eine Pumpe 622 ist mittels eines Feuchtesensors (in Fig. 2a nicht dargestellt) gesteuert, wobei der Feuchtesensor beispielsweise im ersten Füllmaterial 110 angeordnet ist. Weist das erste Füllmaterial 110 einen zu geringen Feuchtigkeitswert auf, pumpt die Pumpe 622 Wasser aus dem Tank 620 über die Zuleitung 624 in das Rohr 400 innerhalb des Schlitzes 100.

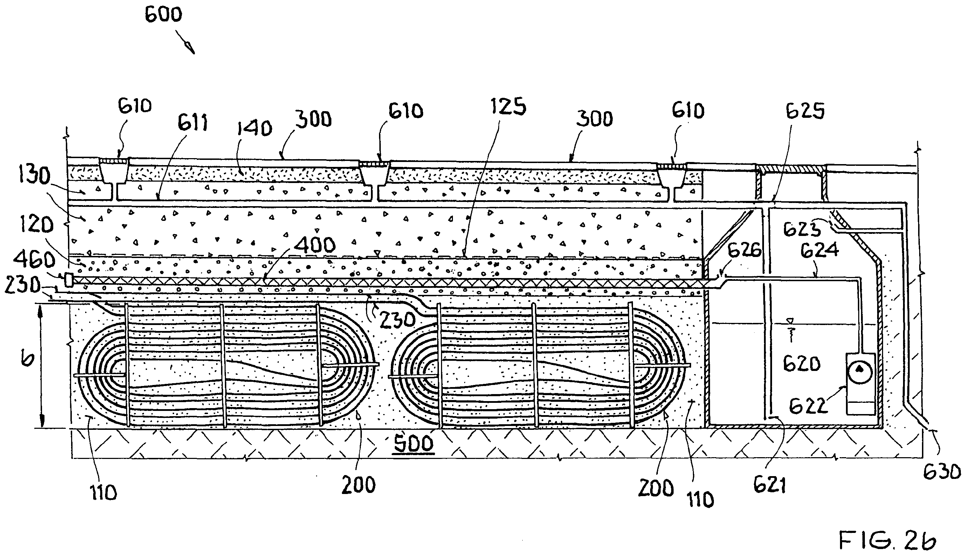

Fig. 2b zeigt ein weiteres Ausführungsbeispiel in seitlicher Schnittansicht. Die Gullys 610 sind über die Zuleitung 611 mit einem Feinfilter 625 mit dem Tank 620 verbunden. Steigt die Wasserhöhe im Tank 620 über die Öffnung 626 wird Wasser in das Rohr 400 eingespeist und dem ersten Füllmaterial 110 zugeführt. Bei zu geringer Feuchte des ersten Füllmaterials 110 kann auch bei niedrigerer Wasserhöhe im Tank 620 sensorgesteuert oder zeitgesteuert mittels der Pumpe 622 Wasser zugeführt werden.

Die Öffnung 626 kann auch als verstellbare Öffnung beispielsweise als Ventil ausgebildet sein. Vorzugsweise ist das Ventil 626 mittels einer Steuerung (in Fig. 2b nicht dargestellt) steuerbar. Vorteilhafterweise ist die Steuerung eingerichtet Wasser kontrolliert ins Erdreich 500 einzubringen. Hierzu ist die Steuerung vorteilhafterweise mit Feuchtesensoren (in Fig. 2b nicht dargestellt) verbunden, die im Erdreich 500 vom Schlitz 100 - beispielsweise einen Meter - distanziert im Erdreich 500 angeordnet sind. Vorteilhafterweise ist die Steuerung eingerichtet bei Erreichen eines Maximalwerts der Feuchtigkeit im Erdreich 500 die weitere Zuführung von Wasser durch Schließen des Ventils 626 und/oder Stoppen der Pumpe 622 zu beenden. Hierdurch wird der technische Effekt erzielt, dass das Erdreich 500 nicht derart durchweicht wird, dass bei einer starken Belastung des Erdreichs 500 beispielsweise durch einen LKW, das Erdreich 500 nachgibt oder Bodenbewegungen verursacht werden.

Weiterhin kann der Vorteil erzielt werden, dass ausschließlich gereinigtes Wasser aus dem Tank 620 entnommen wird, indem die Pumpe 622 das Wasser durch eine schwimmende Entnahme beispielsweise 10 cm unterhalb der Wasseroberfläche entnimmt. Die Partikel reichern sich hingegen an der Wasseroberfläche oder am Grund des Tanks 620 an.

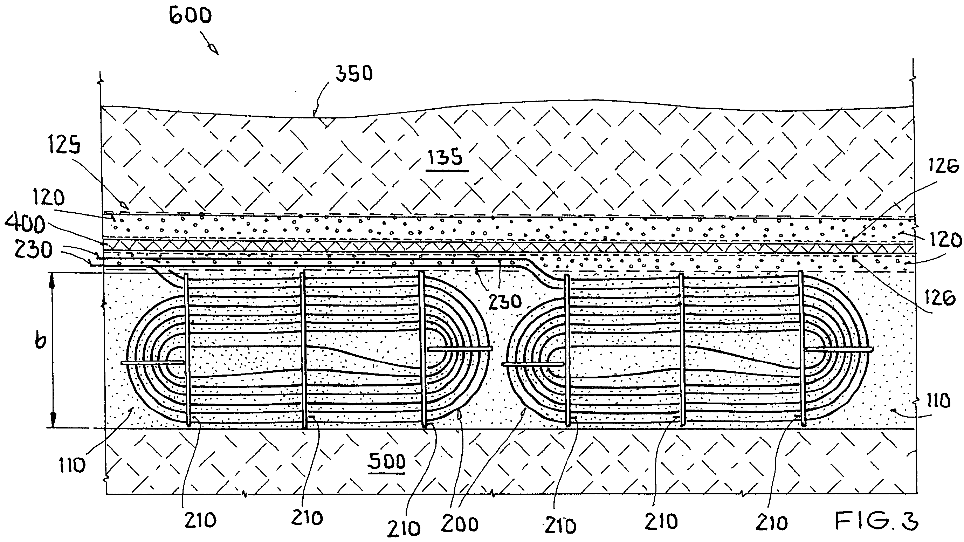

Ein weiteres Ausführungsbeispiel ist in Fig. 3 als seitliche Schnittansicht schematisch dargestellt. Böden in größeren Höhen, beispielsweise oberhalb 500 m können eine geringe durchschnittliche Feuchtigkeit aufweisen. In Fig. 3 ist oberhalb des zweiten Füllmaterials 120 eine wasserdurchlässige Schicht 135 - beispielsweise Boden mit einer Oberfläche 350 - beispielsweise Rasen vorgesehen. Zusätzlich zum Wassereintrag durch Regen über die Oberfläche 350 wird Wasser durch das Rohr 400 in den Schlitz 100 und damit dem ersten Füllmaterial 110 zugeführt. Der Schlitz 100 im Ausführungsbeispiel der Fig. 3 weist eine Tiefe von 3,2m auf, wobei in den Schlitz 100 auch das Erdreich 135 oberhalb der ersten Füllschicht 110 eingebracht ist. Um eine Verschmutzung der Öffnungen 410 des Rohrs 400 zu reduzierten ist ein Filtervlies 125 zwischen dem zweiten Füllmaterial 120 und dem Erdreich 135 eingebracht. Zusätzlich oder alternativ kann das Rohr für diesen Zweck durch ein anderes Filtervlies 126 umwickelt werden.

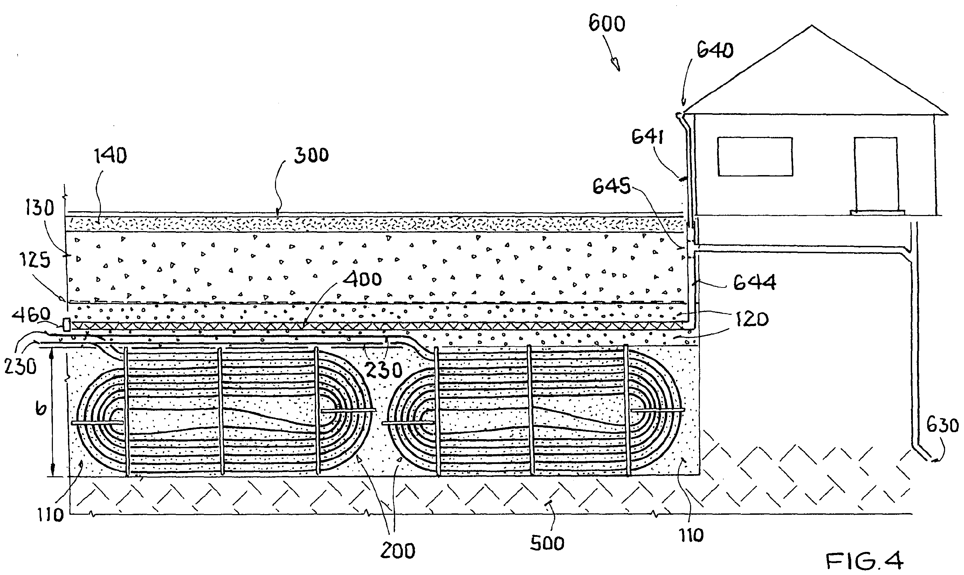

Ein weiteres Ausführungsbeispiel ist in Fig. 4 als seitliche Schnittansicht schematisch dargestellt. Das über ein Dach eines Hauses mittels der Regenrinne 640 gesammelte Regenwasser wird über eine Zuleitung einem Vorfilter 645 zugeführt, und über eine Zuleitung an das Rohr 400 weitergeleitet. Die Verschmutzungen werden vom Vorfilter 645 zum Kanal 630 weitergeleitet. Auch in diesem Fall kann die Fläche oberhalb der Erdkollektorvorrichtungen 200 beispielsweise durch ein Pflaster 300 versiegelt sein.

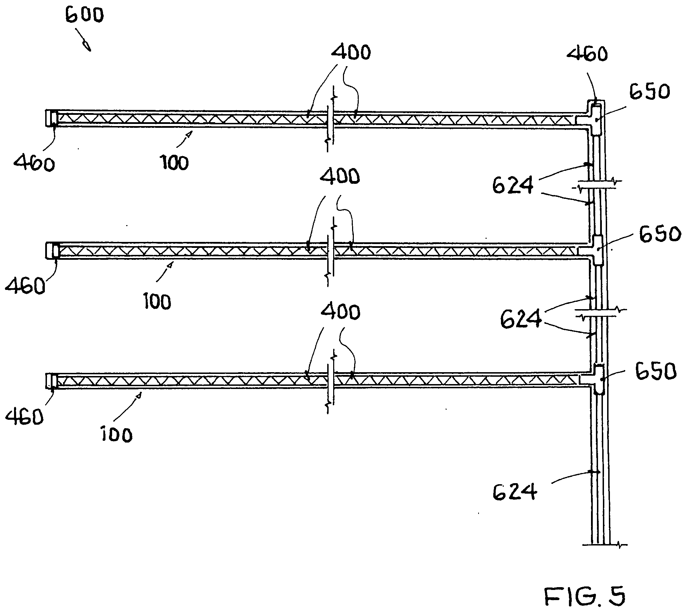

Es können mehrere parallel angeordnete Schlitze 100 vorhanden sein, wie dies in der schematischen Draufsicht der Fig. 5 dargestellt ist. Die Rohre 400 in den Schlitzen 100 sind über T-Stücke 650 mit der Zuleitung 624 verbunden.

Die Erfindung ist nicht auf die dargestellten Ausgestaltungsvarianten der Figuren 1 bis 5 beschränkt. Beispielsweise ist es möglich weitere Füllmaterialen im Schlitz vorzusehen. Auch ist es möglich das Wasser durch andere als die dargestellten Mittel zu reinigen. Die Funktionalität des Erdkollektors gemäß Fig. 2b kann besonders vorteilhaft für einen Parkplatz oder dergleichen verwendet werden.

Bezugszeichenliste

| 100 | Schlitz |
| 110 | erstes Füllmaterial |

| 120 | zweites Füllmaterial |
| 125, 126, 325 | Filtervlies |
| 130, 330 | Schotter |
| 140, 340 | Splitt |
| 151, 152 | Wand des Schlitzes |
| 153 | Boden des Schlitzes |
| 200 | Erdkollektorvorrichtung |
| 210 | Träger |
| 220 | Kunststoffrohr |
| 230 | Verbindungsrohr |
| 300 | Versiegelung, Teer, Pflaster |
| 350 | Erdoberfläche, Rasenfläche |
| 400 | Rohr |
| 410 | Öffnungen |
| 460 | Endkappe, Abschluss |
| 500, 135 | Erdreich |
| 600 | Vorrichtung zur Einspeisung von Wasser |
| 610 | Gully (mit Schlammfang, Sandfang) |
| 611 | Zuleitung |
| 620 | Regenwassertank |
| 621 | beruhigter Einlauf |
| 622 | Pumpe |
| 623 | Überlauf |
| 624 | Zuleitung zum Rohr (keine Öffnungen) |
| 625 | Feinfilter |
| 626 | Öffnung |
| 630 | Kanal |
| 640 | Dachrinne |
| 641 | Zuleitung |
| 644 | Zuleitung |
| 645 | Vorfilter |
| 650 | T-Stück |

| a | Schlitzbreite |
| b | Füllhöhe erstes Füllmaterial |
| c | Füllhöhe zweites Füllmaterial |
| d | Füllhöhe von Schotter |
| e | Füllhöhe von Splitt |
| f | Höhe der Erdkollektorvorrichtung |
| pd | primäre Fließrichtung |
| sd | sekundäre Fließrichtung |

**Patentansprüche**

1. Erdkollektor,

   - mit einem ins Erdreich (500) gefrästen Schlitz (100),
   - mit einer im Schlitz (100) angeordneten Erdkollektorvorrichtung (200) geeignet zum Anschluss an eine Wärmepumpe,
   - mit einem ersten Füllmaterial (110), das den Schlitz (100) im Bereich der Erdkollektorvorrichtung (200) verfüllt, **dadurch gekennzeichnet, dass**
   - das erste Füllmaterial (110) einen höheren Durchlässigkeitsbeiwert ($K_S$) als der Durchlässigkeitsbeiwert ($K_E$) des im Bereich der Erdkollektorvorrichtung (200) an den Schlitz (100) angrenzenden Erdreichs (500) aufweist, und
   - das erste Füllmaterial (110) eine Korngrößenverteilung aufweist, wobei ein Anteil an Korngröße von 0,125 mm bis 1 mm überwiegt.

**2.** Erdkollektor nach Anspruch 1,

- bei dem oberhalb des ersten Füllmaterials (110) im Schlitz (100) ein zweites Füllmaterial (120) angeordnet ist, wobei das zweite Füllmaterial (120) einen höheren Durchlässigkeitsbeiwert ($K_K$) als der Durchlässigkeitsbeiwert ($K_S$) des ersten Füllmaterials (110) aufweist.

**3.** Erdkollektor nach einem der vorhergehenden Ansprüche,

- bei dem oberhalb des ersten Füllmaterials (110) im Schlitz (100) ein Rohr (400) mit Öffnungen (410) zur Abgabe von Wasser angeordnet ist.

**4.** Erdkollektor nach den Ansprüchen 2 und 3,

- bei dem das Rohr (400) im Schlitz (100) vom zweiten Füllmaterial (120) umgeben angeordnet ist.

**5.** Erdkollektor nach einem der vorhergehenden Ansprüche,

- bei dem die Erdkollektorvorrichtung (200) an einer Wand (151) des Schlitzes (100) angeordnet ist.

**6.** Erdkollektor nach einem der vorhergehenden Ansprüche,

- bei dem das erste Füllmaterial (110) im Schlitz (100) eine Wärmekopplung zwischen der Erdkollektorvorrichtung (200) und dem Erdreich (500) bewirkt.

**7.** Erdkollektor nach einem der vorhergehenden Ansprüche,

- bei dem das erste Füllmaterial (110) Sand, insbesondere gereinigten Flusssand, aufweist.

**8.** System mit einem Erdkollektor nach Anspruch 3,

- mit einer Vorrichtung (600) zur Einspeisung von Oberflächenwasser in das Rohr (400).

**9.** System nachAnspruch 8,

- mit einer Steuerung der Wärmepumpe, die zur Regelung einer Temperatur eines durch die Erdkollektorvorrichtung (200) strömendes Mediums eingerichtet ist, wobei die Regelung der Temperatur des Mediums eine Vereisung von Wasser im ersten Füllmaterial (100) verhindert und den Durchlässigkeitsbeiwert ($K_S$) des ersten Füllmaterials (110) erhält.

**10.** Verfahren zur Errichtung eines Erdkollektors,

- bei dem ein Schlitz (100) ins Erdreich (500) gefräst wird,
- bei dem im Schlitz eine Erdkollektorvorrichtung (200) positioniert wird, die für eine Wärmepumpe geeignet ist,
- bei dem der Schlitz (100) im Bereich der Erdkollektorvorrichtung (200) mit einem ersten Füllmaterial (110) verfüllt wird, wobei das erste Füllmaterial (110) einen höheren Durchlässigkeitsbeiwert ($K_S$) als der Durchlässigkeitsbeiwert ($K_E$) des im Bereich der Erdkollektorvorrichtung (200) an den Schlitz (100) angrenzenden Erdreichs (500) aufweist,
- bei dem das erste Füllmaterial (110) eine Korngrößenverteilung aufweist, wobei ein Anteil an Korngröße von 0,125 mm bis 1 mm überwiegt.

**11.** Verfahren nach Anspruch 10,

- bei dem oberhalb des ersten Füllmaterials (110) im Schlitz (100) ein Rohr (400) mit Öffnungen (410) zur Abgabe von Wasser angeordnet wird.

**Claims**

1. A ground collector

   - with a slot (100) milled into the ground (500),
   - with a ground collector device (200), disposed in the slot (100), suitable for connecting to a heat pump,
   - with a first filler material (110), which fills the slot (100) in the area of the ground collector device (200), **characterized in that**
   - the first filler material (110) has a higher coefficient of permeability ($K_s$) than the coefficient of permeability ($K_E$) of the ground (500) adjacent to the slot (100) in the area of the ground collector device (200), and
   - the first filler material (110) has a particle size distribution, wherein the proportion of particle sizes from 0.125 mm to 1 mm predominates.

2. The ground collector of claim 1

   - for which a second filler material (120) is disposed above the first filler material (110) in the slot (100), wherein the second filler material (120) has a higher coefficient of permeability ($K_K$) than the coefficient of permeability ($K_s$) of the first filler material (110).

3. The ground collector of one of the preceding claims,

   - for which a pipe (400) with openings (410) for emitting water is disposed above the first filler material (110) in the slot (100).

4. The ground collector of claims 2 and 3

   - for which the pipe (400) in the slot (100) is disposed, surrounded by the second filler material (120).

5. The ground collector of one of the preceding claims,

   - for which the ground collector device (200) is disposed at a wall (151) of the slot 100).

6. The ground collector of one of the preceding claims,

   - for which the first filler material (110) in the slot (100) brings about thermal coupling between the ground collector device (200) and the ground (500).

7. The ground collector of one of the preceding claims,

   - for which the first filler material (110) has sand, particularly purified river sand.

8. A system with a ground collector of claim 3,

   - with a device (600) for feeding surface water into the pipe (400).

9. A system of claim 8

   - with a control for the heat pump, which is set up for regulating a temperature of a medium flowing through the ground collector device (200), wherein the regulation of the temperature of the medium prevents icing of water in the first filler material (100) and receives the coefficient of permeability ($K_s$) of the first filler material (110).

10. Method for setting up a ground collector,

    - for which a slot (100) is milled into the ground (500)
    - for which a ground collector device (200), which is suitable for a heat pump, is positioned in the slot,
    - for which the slot (100) in the area of the ground collector device (200) is filled with a first filler material (110), wherein the first filler material (110) has a higher coefficient of permeability ($K_s$), than the coefficient of permeability ($K_E$) of the ground (500) adjacent to the slot (100) in the area of the collector device (200),

- for which the first filler material (110) has a particle size distribution, wherein the proportion of the particle size from 0.125 mm to 1 mm predominates.

**11.** The method of claim 10,

- for which a pipe (400) with openings (410) for emitting water is disposed above the first filler material (110) in the slot (100).

**Revendications**

**1.** Collecteur géothermique,

- comprenant une fente (100) fraisée dans la terre (500),
- comprenant un dispositif collecteur géothermique (200) disposé dans la fente (100), apte au raccordement à une pompe à chaleur,
- comprenant un premier matériau de remplissage (110), qui remplit la fente (100) dans la zone du dispositif collecteur géothermique (200), **caractérisé en ce que**
- dans lequel le premier matériau de remplissage (110) présente un coefficient de perméabilité ($K_S$) supérieur au coefficient de perméabilité ($K_E$) de la terre (500) adjacente à la fente (100) dans la zone du dispositif collecteur géothermique (200), et
- dans lequel le premier matériau de remplissage (110) présente une répartition granulométrique, une part de grosseur de grain de 0,125 mm à 1 mm étant prépondérante.

**2.** Collecteur géothermique selon la revendication 1,

- dans lequel un second matériau de remplissage (120) est disposé dans la fente (100) au-dessus du premier matériau de remplissage (110), le second matériau de remplissage (120) présentant un coefficient de perméabilité ($K_K$) supérieur au coefficient de perméabilité ($K_S$) du premier matériau de remplissage (110).

**3.** Collecteur géothermique selon l'une des revendications précédentes,

- dans lequel un tuyau (400) doté d'ouvertures (410) destinées à distribuer de l'eau est disposé dans la fente (100) au-dessus du premier matériau de remplissage (110).

**4.** Collecteur géothermique selon les revendications 2 et 3,

- dans lequel le tuyau (400) est disposé dans la fente (100) entouré du second matériau de remplissage (120).

**5.** Collecteur géothermique selon l'une des revendications précédentes,

- dans lequel le dispositif collecteur géothermique (200) est disposé sur une paroi (151) de la fente (100).

**6.** Collecteur géothermique selon l'une des revendications précédentes,

- dans lequel le premier matériau de remplissage (110) dans la fente (100) provoque un couplage thermique entre le dispositif collecteur géothermique (200) et la terre (500).

**7.** Collecteur géothermique selon l'une des revendications précédentes,

- dans lequel le premier matériau de remplissage (110) comporte du sable, en particulier du sable de rivière nettoyé.

**8.** Système comprenant un collecteur géothermique selon la revendication 3,

- comprenant un dispositif (600) destiné à alimenter de l'eau de surface dans le tuyau (400).

**9.** Système selon la revendication 8,

- comprenant un dispositif de commande de la pompe à chaleur, qui est configuré pour réguler une température d'un milieu circulant à travers le dispositif collecteur géothermique (200), la régulation de la température du milieu empêchant un givrage de l'eau dans le premier matériau de remplissage (100) et maintenant le coefficient de perméabilité ($K_S$) du premier matériau de remplissage (110).

10. Procédé pour installer un collecteur géothermique,

- dans lequel une fente (100) est fraisée dans la terre (500),
- dans lequel un dispositif collecteur géothermique (200), qui est apte pour une pompe à chaleur, est positionné dans la fente,
- dans lequel la fente (100) est remplie d'un premier matériau de remplissage (110) dans la zone du dispositif collecteur géothermique (200), le premier matériau de remplissage (110) présentant un coefficient de perméabilité ($K_S$) supérieur au coefficient de perméabilité ($K_E$) de la terre (500) adjacente à la fente (100) dans la zone du dispositif collecteur géothermique (200),
- dans lequel le premier matériau de remplissage (110) présente une répartition granulométrique, une part de grosseur de grain de 0,125 mm à 1 mm étant prépondérante.

11. Procédé selon la revendication 10,

- dans lequel un tuyau (400) doté d'ouvertures (410) destinées à distribuer de l'eau est disposé dans la fente (100) au-dessus du premier matériau de remplissage (110).

FIG.1

FIG. 2a

EP 2 572 145 B1

FIG. 2b

FIG.3

FIG.4

EP 2 572 145 B1

FIG. 5

**IN DER BESCHREIBUNG AUFGEFÜHRTE DOKUMENTE**

**In der Beschreibung aufgeführte Patentdokumente**

- DE 10200106 B4
- US 4106555 A
- DE 102006061065 A1
- DE 3148600 A1
- DE 102006001169 A1